# EUROPÄISCHE PATENTANMELDUNG

(11) **EP 3 297 131 A1**
(43) Veröffentlichungstag der Anmeldung: **21.03.2018**
(21) Anmeldenummer: 16189489.4
(22) Anmeldetag: 19.09.2016
(51) Int. Cl.: H02K 3/12, H02K 3/50

(54) **STATOR FÜR EINE ELEKTRISCHE ROTIERENDE MASCHINE**

(71) Anmelder: Siemens Aktiengesellschaft, 80333 München (DE)
(72) Erfinder: Kümmlee, Horst, 13505 Berlin (DE)

(57) **Zusammenfassung**

Die Erfindung betrifft einen Stator (8) für eine elektrische rotierende Maschine (2), welcher ein Statorblechpaket (16) mit Spulenstäben (20) und mindestens eine Statorwickelkopfplatine (24) mit einem isolierenden Grundkörper (28) aufweist. Um die axiale Länge des Stators (8) zu verringern, wird vorgeschlagen, dass in den isolierenden Grundkörper (28) Leiterbahnen (26) integriert sind, wobei die mindestens eine Statorwickelkopfplatine (24) auf einer Stirnseite (23) des Statorblechpakets (16) aufliegt und wobei die Leiterbahnen (26) mit den Spulenstäben (20) stoffschlüssig verbunden sind.

## Beschreibung

Die Erfindung betrifft einen Stator für eine elektrische rotierende Maschine.

Darüber hinaus betrifft die Erfindung eine elektrische rotierende Maschine mit mindestens einem derartigen Stator.

Weiterhin betrifft die Erfindung einen Gondelantrieb mit zumindest einer derartigen elektrischen rotierenden Maschine.

Ferner betrifft die Erfindung ein Schiff mit zumindest einem derartigen Gondelantrieb.

Die Erfindung betrifft überdies ein Verfahren zur Herstellung eines derartigen Stators.

Ein derartiger Stator kommt bevorzugt in einer elektrischen rotierenden Maschine, insbesondere in einem Motor oder Generator, vor, die im Schiffsbau eingesetzt wird und eine Leistungsaufnahme von mindestens einem Megawatt aufweist.

Üblicherweise werden die Statorwicklungen einer derartigen elektrischen rotierenden Maschine als Formspulen, die auch Stabspulen genannt werden, ausgeführt. Formspulen werden beispielsweise mittels Gießen oder Pulvermetallurgie hergestellt. An den Enden der Formspulen befindet sich ein Wickelkopf, der durch Biegen und Abkröpfen der Leiter der Formspulen entsteht. Dieser Wickelkopf benötigt einen erheblichen axialen Bauraum. Durch die zusätzliche inaktive Leiterlänge des Wickelkopfes entstehen ohmsche Verluste, die den Wirkungsgrad der elektrischen rotierenden Maschine verringern. Darüber hinaus ist es erforderlich, die Wickelköpfe zu kühlen. Zur Kühlung wird weiterer Bauraum benötigt.

Insbesondere bei schnelllaufenden niederpoligen Maschinen wirkt sich der durch die Wickelköpfe vergrößerte Lagerabstand nachteilig auf die Rotordynamik aus. Ferner sind zusätzliche aufwendige Versteifungsmaßnahmen aufgrund der großen Leiterlängen erforderlich, um unzulässige Schwingungen und Verformungen im Betrieb zu verhindern. Darüber hinaus erhöhen sich die Gesamtlänge und das Gewicht der elektrischen rotierenden Maschine. Insbesondere bei einem modularen Aufbau großer Maschinen, bei dem mehrere Teilmaschinen in Axialrichtung eine Gesamtmaschine bilden, entstehen aufgrund der Wickelköpfe erhebliche elektrisch nicht genutzte Längen.

Die Patentschrift DE 10 2009 032 882 B3 beschreibt ein Verfahren zur Herstellung einer Formspule für eine Etagenwicklung einer dynamoelektrischen Maschine sowie eine mittels des besagten Verfahrens hergestellte Formspule. Um die Herstellung der Formspule zu vereinfachen, wird diese aus einer Rohspule hergestellt, wobei die Rohspule zwei Längsseiten aufweist, die dafür vorgesehen sind, in Nuten eines Ständers oder eines Rotors der dynamoelektrischen Maschine eingelegt zu werden. Die Rohspule weist zwei Wickelkopfseiten auf, die dafür vorgesehen sind, jeweils einen Wickelkopf der Formspule zu bilden, wobei die Längsseiten um 90° derart gebogen werden, um die Längsseiten in die Nuten einzulegen und die Wickelkopfseiten von den Längsseiten abzukröpfen.

Die Offenlegungsschrift DE 199 14 942 A1 beschreibt ein Verfahren zur Herstellung einer Statorwicklung für eine elektrische Maschine und eine solche Statorwicklung. Die Maschine hat ausgeprägte Pole. Spulenleiter ragen mit ihren Enden in axialer Richtung über das Statorblechpaket hinaus und sind in Klemmen von Baugruppen befestigt. Auf den Baugruppen befinden sich Leiterbahnen, die die Windungen mit den Leitern bilden bzw. von Klemmen zu externen Anschlußstellen verlaufen.

Die Patentschrift EP 1 742 330 B1 beschreibt einen Ständerwickelkopf für ein Ständerteil eines Turbogenerators. Der Ständerwickelkopf ist in Form einer Scheibe mit einer mittigen Auslassung zur Durchführung eines Läufers gebildet, wobei die Scheibe einen isolierenden Grundkörper aufweist, in den eine elektrische Verbindung zur Kontaktierung eines Ständerleiters integriert ist. Die Kontaktierung wird in Form einer Steckverbindung und/oder mit Durchkontaktierungen hergestellt.

Die Offenlegungsschrift DE 10 2014 207 621 A1 offenbart einen Stator einer elektrischen rotierenden Maschine, der einen Statorkern mit mehreren Schlitzen, eine segmentierte Wicklung mit mehreren Phasen sowie mehrere Basisplatten, die auf jedes Ende des Statorkerns in axialer Richtung geschichtet sind, enthält. Der Statorkern und mehrere Wicklungsstangen der segmentierten Wicklung bilden eine Statorkernanordnung. Die mehreren Basisplatten und mehrere Wicklungsendverbinder der segmentierten Wicklung bilden mehrere Basisplattenanordnungen. Der Stator ist durch die Statorkernanordnung und die mehreren Basisplattenanordnungen, die auf jedes Ende der Statorkernanordnung geschichtet sind, konfiguriert.

Der Erfindung liegt die Aufgabe zugrunde, einen Stator für eine elektrische rotierende Maschine bereitzustellen, der eine geringe axiale Länge aufweist.

Die Aufgabe wird erfindungsgemäß durch einen Stator für eine elektrische rotierende Maschine gelöst, welcher ein Statorblechpaket mit Spulenstäben und mindestens eine Statorwickelkopfplatine mit einem isolierenden Grundkörper aufweist, wobei in den isolierenden Grundkörper Leiterbahnen integriert sind, wobei die mindestens eine Statorwickelkopfplatine auf einer Stirnseite des Statorblechpakets aufliegt und wobei die Leiterbahnen mit den Spulenstäben stoffschlüssig verbunden sind.

Weiterhin wird die Aufgabe erfindungsgemäß durch eine elektrische rotierende Maschine gelöst, die zumindest einen derartigen Stator aufweist.

Ferner wird die Aufgabe erfindungsgemäß durch einen Gondelantrieb mit zumindest einer derartigen elektrischen rotierenden Maschine gelöst.

Darüber hinaus wird die Aufgabe erfindungsgemäß durch ein Schiff mit zumindest einem derartigen Gondelantrieb gelöst.

Überdies wird die Aufgabe erfindungsgemäß durch ein Verfahren zur Herstellung eines derartigen Stators gelöst.

Die in Bezug auf den Stator nachstehend angeführten Vorteile und bevorzugten Ausgestaltungen lassen sich sinngemäß auf die elektrische rotierende Maschine, den Gondelantrieb, das Schiff und das Herstellungsverfahren übertragen.

Die Erfindung basiert auf der Idee, die axiale Länge des Stators einer elektrischen rotierenden Maschine mit einer Leistung von mindestens einem Megawatt durch Umgestaltung der Wickelköpfe, die in der Regel einen erheblichen axialen Bauraum benötigen, zu reduzieren. Während die Wicklungen im Bereich des Statorblechpaktes, die sich insbesondere in Nuten befinden, weiterhin in ihrer herkömmlichen Form als Spulenstäbe ausgebildet sind, sind die Wickelköpfe als eine Statorwickelkopfplatine ausgestaltet, in der Leiterbahnen verlaufen, die die jeweiligen Spulenstäbe miteinander verbinden. Die Leiterbahnen der Statorwickelkopfplatine sind von einem isolierenden Grundkörper umgeben, der die Isolierung der Leiter im Bereich der Wickelköpfe ersetzt. Die Wickelkopfplatine liegt, insbesondere direkt und vollflächig, auf dem Statorblechpaket auf, so dass zumindest ein Teil der Entwärmung der Leiterbahnen über das Statorblechpakt stattfindet, insbesondere wenn der isolierende Grundkörper eine hohe Wärmeleitfähigkeit aufweist. Durch die Verwendung einer derartigen Statorwickelkopfplatine verkürzt sich die axiale Länge des Stators erheblich und es treten weniger ohmsche Verluste im Bereich der Wickelköpfe auf. Die Spulenstäbe sind dabei mit den Leiterbahnen stoffschlüssig verbunden. Beispielsweise sind die Leiterbahnen mit den Spulenstäben verschweißt oder verlötet. Eine stoffschlüssige Verbindung ist sehr platzsparend und erfordert keine zusätzlichen Verbindungselemente. Daher weist der Stator insgesamt eine sehr geringe axiale Länge auf.

Vorteilhafterweise ist die stoffschlüssige Verbindung als Schweißverbindung ausgebildet. Die Spulenstäbe werden mit den Leiterbahnen, insbesondere durch Laserschweißen, flächig verschweißt. Eine Schweißverbindung ist platzsparend und es können hohe Kräfte und Momente übertragen werden.

In einer bevorzugten Ausführungsform ist die Statorwickelkopfplatine mehrlagig ausgestaltet. Eine mehrlagige Statorwickelkopfplatine weist mehrere Schichten mindestens eines isolierenden Materials auf, wobei die Leiterbahnen in mindestens einer Schicht verlaufen. Durch eine mehrlagige Statorwickelkopfplatine ist es möglich, die elektrischen, mechanischen und thermischen Eigenschaften der Statorwickelkopfplatine im Hinblick auf eine geringe axiale Länge und eine effiziente Entwärmung zu optimieren.

In besonders vorteilhafter Weise umfasst die mehrlagige Statorwickelkopfplatine mindestens zwei übereinander angeordnete Lagen, welche jeweils mindestens eine Leiterbahn aufweisen. Der Verlauf von übereinander angeordneten Leiterbahnlagen ist flexibel und platzsparend realisierbar.

In einer weiteren bevorzugten Ausführungsform beträgt eine Dicke der Leiterbahnen mindestens einige Millimeter, insbesondere mindestens 3 Millimeter, und maximal einige Zentimeter, insbesondere maximal 3 Zentimeter. Durch eine derartige Leiterbahndicke wird eine hohe Stromtragfähigkeit erzielt und die ohmschen Verluste sind sehr gering.

Bei einer weiteren vorteilhaften Ausgestaltung ist die Statorwickelkopfplatine über Verbindungselemente, insbesondere Bolzen, mit dem Statorblechpaket verbunden. Eine derartige Verbindung ist bewährt und zuverlässig.

Auf vorteilhafte Weise verlaufen die Verbindungselemente in Axialrichtung durch das Statorblechpaket. Die Verbindungselemente halten beispielsweise zusätzlich das Statorblechpaket zusammen, so dass keine zusätzlichen Bolzen erforderlich sind, wodurch Bauraum und Kosten für weitere Verbindungselemente eingespart werden.

In einer bevorzugten Ausführungsform ist die Statorwickelkopfplatine als Druckplatte ausgeführt. Die Blechpakete des Statorblechpakets werden durch an beiden axialen Enden des Statorblechpakets angeordnete Druckplatte zusammengehalten. Insbesondere wird zumindest eine Druckplatte des Statorblechpakets durch eine Statorwickelkopfplatine ersetzt, sodass insgesamt axialer Bauraum eingespart wird.

Vorteilhaft stehen die Leiterbahnen mit dem Statorblechpaket in einer wärmeleitfähigen Verbindung. Insbesondere ist die wärmeleitfähige Verbindung flächig über den isolierenden Grundkörper hergestellt. Zumindest ein Teil der Entwärmung der Leiterbahnen findet somit über das Statorblechpaket statt.

Auf vorteilhafte Weise enthält der isolierende Grundkörper einen keramischen Werkstoff. Insbesondere besteht der isolierende Grundkörper zumindest teilweise aus mindestens einem keramischen Werkstoff oder einem Kunststoff, der Anteile mindestens eines keramischen Werkstoffs aufweist. Keramische Werkstoffe, wie beispielsweise Aluminiumoxid, Berylliumoxid oder Siliciumcarbid, weisen sehr gute Isolationseigenschaften, eine hohe Robustheit und eine gute Wärmeleitfähigkeit, beispielsweise von mindestens 5 Wm-1K-1, auf. Insbesondere die hohe Wärmeleitfähigkeit des keramischen Werkstoffs ermöglicht eine zumindest teilweise Entwärmung der Leiterbahnen über das Statorblechpakt, wodurch insbesondere weniger Mittel zur Kühlung in der Statorwickelkopfplatine erforderlich sind und sich der benötigte Bauraum der Statorwickelkopfplatine, insbesondere in axiale Richtung, reduziert. Ferner ermöglichen die sehr guten Isolationseigenschaften des keramischen Werkstoffs eine kompaktere Anordnung der Leiterbahnen, was zu einer zusätzlichen Reduzierung des erforderlichen Bauraums der Statorwickelkopfplatine führt.

Zweckdienlicherweise enthält der isolierende Grundkörper Aluminiumoxid. Insbesondere enthält der isolierende Grundkörper aus mindestens 96%iges Aluminiumoxid oder einen Kunststoff, der Anteile von Aluminiumoxid aufweist. Aluminiumoxid ist neben seiner hohen Wärmeleitfähigkeit und sehr guten Isolationseigenschaften vergleichsweise kostengünstig.

Bei einer weiteren vorteilhaften Ausgestaltung ist die Statorwickelkopfplatine zumindest teilweise mit einem additiven Fertigungsverfahren hergestellt. Additive Fertigungsverfahren sind beispielsweise 3D-Druck und Siebdruck. Beispielsweise wird der isolierende Grundkörper mit einem 3D-Druck-Verfahren oder einem Siebdruckverfahren hergestellt und anschließend werden die Leiterbahnen, beispielsweise mit einem Druckgussverfahren, gegossen. Alternativ werden die Leiterbahnen mit einem 3D-Druck-Verfahren oder einem Siebdruckverfahren hergestellt. Anschließend wird der isolierende Grundkörper, beispielsweise mit einem Sinterverfahren, angebracht. Ein additives Fertigungsverfahren ermöglicht die Realisierung komplexer und kompakter Strukturen, was zu einer Verkleinerung der Statorwickelkopfplatine führt.

In einer bevorzugten Ausführungsform weist die elektrische rotierende Maschine mindestens einen derartigen Stator auf. Insbesondere bei der Verwendung von zwei oder mehr Statoren auf einer Welle der elektrischen rotierenden Maschine verkürzt sich die axiale Länge der elektrischen rotierenden Maschine durch die Verwendung von Statorwickelkopfplatinen.

Im Folgenden wird die Erfindung anhand der in den Figuren dargestellten Ausführungsbeispiele näher beschrieben und erläutert.

Es zeigen:
- FIG 1: einen Längsschnitt einer elektrischen rotierenden Maschine,
- FIG 2: einen dreidimensionalen Ausschnitt einer ersten Ausführungsform eines Stators im Bereich einer Statorwickelkopfplatine,
- FIG 3: einen Längsschnitt einer zweiten Ausführungsform des Stators im Bereich der Statorwickelkopfplatine,
- FIG 4: einen Querschnitt der zweiten Ausführungsform des Stators im Bereich der Statorwickelkopfplatine,
- FIG 5: einen Querschnitt einer dritten Ausführungsform des Stators im Bereich der Statorwickelkopfplatine,
- FIG 6: einen dreidimensionalen Ausschnitt der Statorwickelkopfplatine und
- FIG 7: ein Schiff mit einem Gondelantrieb.

Gleiche Bezugszeichen haben in den verschiedenen Figuren die gleiche Bedeutung.

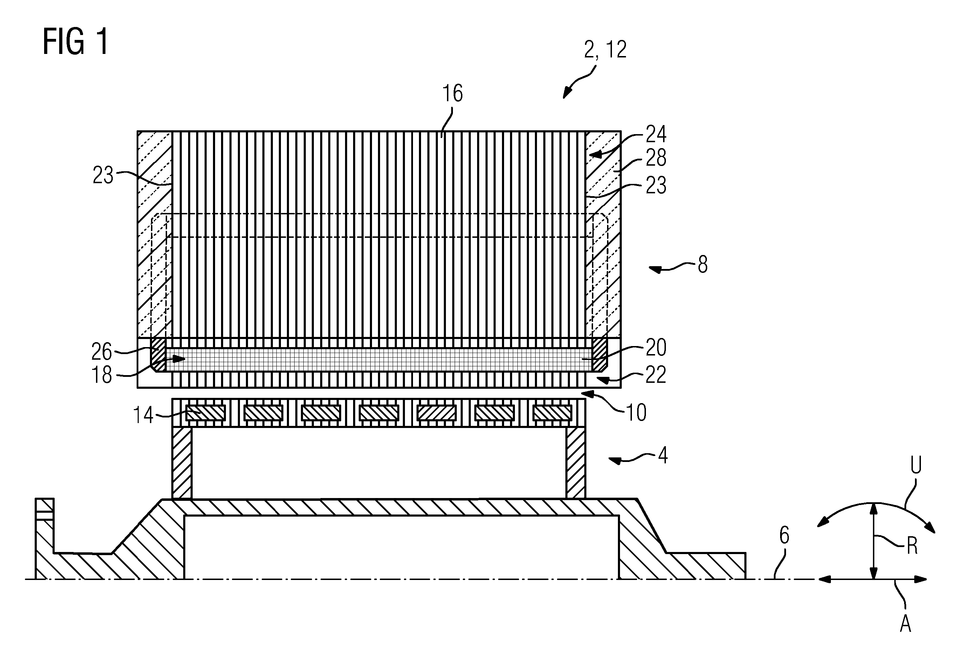

FIG 1 zeigt einen Längsschnitt einer elektrischen rotierenden Maschine 2, die einen Rotor 4, der um eine Rotationsachse 6 rotierbar ist, und einen den Rotor 4 umgebenden Stator 8 aufweist. Zwischen dem Rotor 4 und dem Stator 8 befindet sich ein Spalt 10, der bevorzugt als Luftspalt ausgeführt ist. Die Rotationsachse 6 definiert eine Axialrichtung A, eine Radialrichtung R und eine Umfangsrichtung U. Die elektrische rotierende Maschine 2 ist exemplarisch als Synchronmaschine 12 ausgeführt und weist auf dem Rotor 4 Permanentmagnete 14 auf. Der Stator 8 umfasst ein Statorblechpaket 16 mit Wicklungen 18. Die Wicklungen 18 weisen Spulenstäbe 20 auf, die in Axialrichtung A durch jeweils eine Nut 22 des Statorblechpakets 16 verlaufen. Auf beiden Stirnseiten 23 des Statorblechpakets 16 liegt jeweils mindestens eine Statorwickelkopfplatine 24 auf. Anschlüsse der Wicklungen 18 an einen Klemmenkasten sind aus Gründen der Übersichtlichkeit nicht dargestellt.

Die Statorwickelkopfplatinen 24 weisen Leiterbahnen 26 auf, die die in den jeweiligen Nuten 22 verlaufenden Spulenstäbe 20 miteinander verbinden. Die Leiterbahnen 26 der Statorwickelkopfplatinen 24 umgibt ein isolierender Grundkörper 28, der eine wärmeleitfähige Verbindung der Leiterbahnen 26 mit dem Statorblechpaket 16 herstellt. Ferner sind die Leiterbahnen 26 durch den isolierenden Grundkörper 28 gekapselt. Der isolierende Grundkörper 28 enthält einen keramischen Werkstoff, beispielsweise Aluminiumoxid oder Aluminiumnitrit, mit einer hohen Wärmeleitfähigkeit, insbesondere mit einer Wärmeleitfähigkeit von mehr als 5 W/mK. Alternativ enthält der isolierende Grundkörper 28 einen Kunststoff, der Anteile mindestens eines keramischen Werkstoffs aufweist. Insbesondere bei der Verwendung eines Kunststoffs ist es erforderlich die Leiterbahnen 26 zusätzlich, beispielsweise über Kühlkanäle, zu entwärmen.

Die Statorwickelkopfplatine, die eine Dicke im Zentimeterbereich, insbesondere im Bereich zwischen 3 Zentimeter und 10 Zentimeter, aufweist, ist vollständig oder zumindest teilweise mit einem additiven Fertigungsverfahren hergestellt. Beispielsweise wird der isolierende Grundkörper 28 mit einem 3D-Druck-Verfahren oder einem Siebdruckverfahren hergestellt und anschließend werden die Leiterbahnen 26, beispielsweise mit einem Druckgussverfahren, gegossen. Alternativ werden die Leiterbahnen 26 mit einem 3D-Druck-Verfahren oder einem Siebdruckverfahren hergestellt. Anschließend wird der isolierende Grundkörper 28, beispielsweise mit einem Sinterverfahren, angebracht. Eine weitere Möglichkeit zur Herstellung der Statorwickelkopfplatine 24 ist, dass sowohl die Leiterbahnen 26 als auch der isolierende Grundkörper 28, bevorzugt zeitgleich, mit einem 3D-Druck-Verfahren oder einem Siebdruckverfahren hergestellt werden.

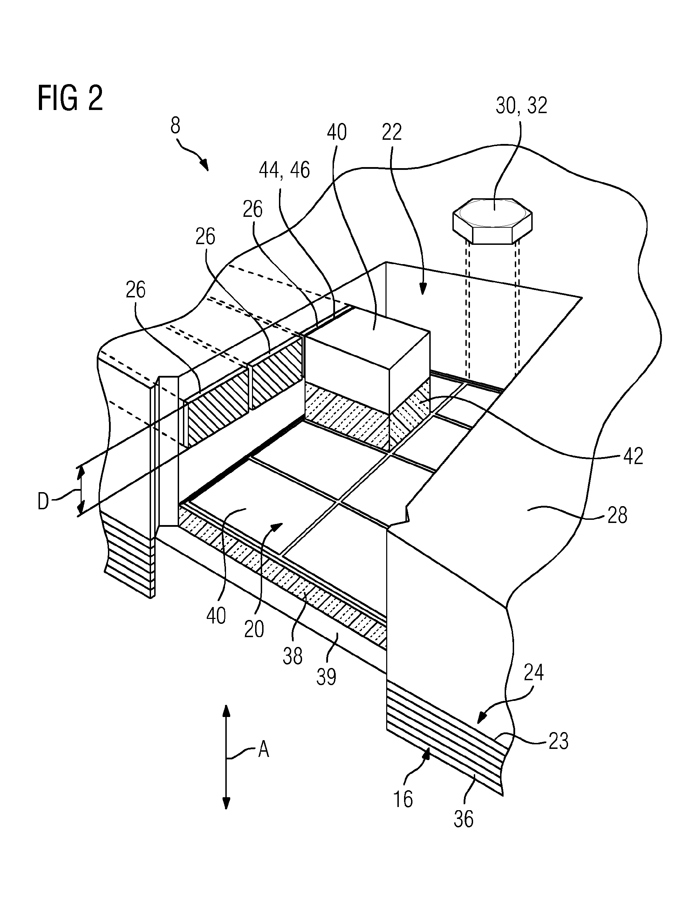

FIG 2 zeigt einen dreidimensionalen Ausschnitt einer ersten Ausführungsform eines Stators 8 im Bereich der Statorwickelkopfplatine 24. Die Statorwickelkopfplatine 24 liegt, wie in FIG 1 gezeigt, auf dem Statorblechpaket 16 auf, wobei das Statorblechpaket 16 Nuten 22 aufweist und die Form der Statorwickelkopfplatine 24 im Bereich der Nuten 22 im Wesentlichen an die Form des Statorblechpakets 16 angepasst ist. Die Statorwickelkopfplatine 24 ist über Verbindungselemente 30, die als Spannbolzen 32 ausgeführt sind, mit dem Statorblechpaket 16 verbunden. Die Statorwickelkopfplatine 24 übernimmt zusätzlich die Funktion einer Druckplatte 34, sodass zum Zusammenhalten von Elektroblechen 36 des Statorblechpakets 16 keine zusätzliche Druckplatte 34 erforderlich ist.

Durch die Nut 22 verläuft ein Spulenstab 20 mit einer Hauptisolierung 38, wobei die Nut 22 von einem Nutverschlusskeil 39 verschlossen ist. Der Spulenstab 20 weist mehrere Teilleiter 40 auf, die jeweils mit einer Teilleiterisolierung 42 umwickelt sind. Eine Seitenlänge eines Querschnitts der Teilleiter 40 liegt im Bereich von mindestens einigen Millimetern, insbesondere mindestens 3 Millimetern, und maximal einigen Zentimetern, insbesondere maximal 3 Zentimetern. Die Teilleiter 40 sind jeweils mit einer Leiterbahn 26, welche durch den isolierenden Grundkörper 28 verläuft, über eine stoffschlüssige Verbindung 44 verbunden. Insbesondere ist die stoffschlüssige Verbindung 44 als Schweißverbindung 46 ausgebildet. Aus Gründen der Übersichtlichkeit ist nur eine Verbindung zwischen einem Teilleiter 40 und einer Leiterbahn 26 dargestellt. Die Dicke D einer Leiterbahn 26 beträgt mindestens einige Millimeter, insbesondere mindestens 3 Millimeter, und maximal einige Zentimeter, insbesondere maximal 3 Zentimeter. Die weitere Ausführung des Stators 8 entspricht der in FIG 1.

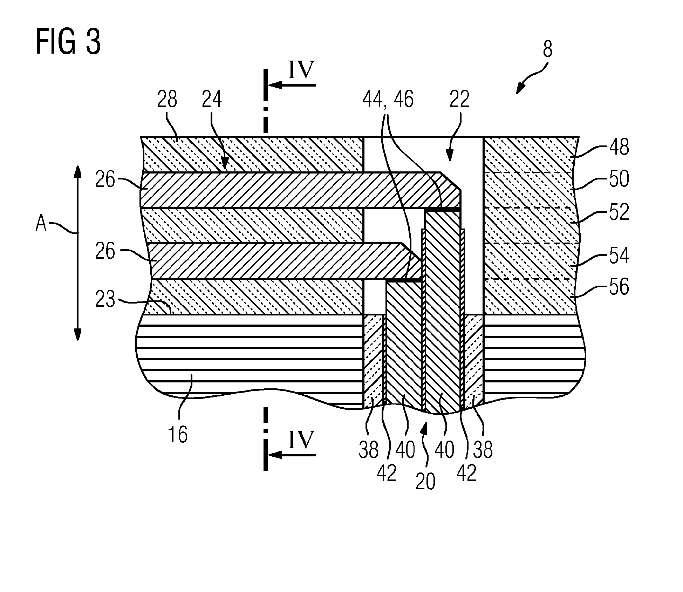

FIG 3 zeigt einen Längsschnitt einer zweiten Ausführungsform des Stators 8 im Bereich der Statorwickelkopfplatine 24, wobei die Statorwickelkopfplatine 24 fünf Lagen 48, 50, 52, 54, 56 aufweist. Die Leiterbahnen 26 verlaufen in der zweiten Lage 50 und in der vierten Lage 54. Die dritte Lage 52 isoliert die Leiterbahnen 26 voneinander. Die in einem Spulenstab 20 verlaufenden Teilleiter 40 werden in unterschiedlichen Lagen 48, 50, 52, 54, 56 mit jeweils einer Leiterbahn 26 verbunden. Nur im Bereich der stoffschlüssigen Verbindung 44 wird die Teilleiterisolierung 42 ausgespart, um eine Kriechstrecke zwischen einem freiliegenden Ende des Teilleiters 40 und dem Statorblechpaket 16 zu verlängern. Zusätzlich wird der Hohlraum in der Nut 22 mit einem Isolierstoff aufgefüllt, um Überschläge zu verhindern. Die weitere Ausführung des Stators 8 entspricht der in FIG 2.

Da die Leiterbahnen 26 der Statorwickelkopfplatine 24 sehr dicht am Statorblechpaket 16 verlaufen, kann es durch Streumagnetfelder zu Wirbelströmen und damit einher gehenden Erwärmungen in den axial äußeren Blechen des Statorblechpakets 16 kommen. Um die Ausbreitung von Wirbelströmen im Statorblechpaket 16 zu verhindern, wird bevorzugt zwischen der Statorwickelkopfplatine 24 und dem Statorblechpaket 16 ein in FIG 3 nicht dargestelltes Blech, das bevorzugt als Kupferblech ausgeführt ist, eingefügt. Alternativ ist das Kupferblech als zusätzliche Lage der Statorwickelkopfplatine 24 ausgebildet.

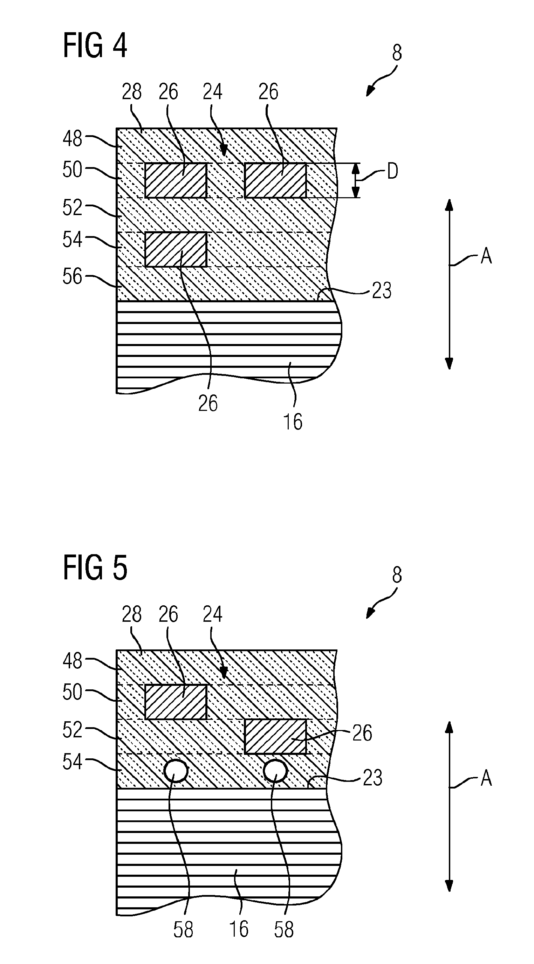

FIG 4 zeigt einen Querschnitt der zweiten Ausführungsform des Stators 8 im Bereich der Statorwickelkopfplatine 24. Wie in FIG 3 gezeigt verlaufen die Leiterbahnen 26 in der zweiten Lage 50 und in der vierten Lage 54. Die isolierende dritte Lage 52 ermöglicht, dass die Leiterbahnen 26 ganz oder teilweise übereinander verlaufen, um, insbesondere bei komplizierten Anordnungen, Bauraum einzusparen. Die weitere Ausführung des Stators 8 entspricht der in FIG 3.

FIG 5 zeigt einen Querschnitt einer dritten Ausführungsform des Stators 8 im Bereich der Statorwickelkopfplatine 24. Die Statorwickelkopfplatine 24 weist vier Lagen 48, 50, 52, 54 auf, wobei die Leiterbahnen 26 in der zweiten Lage 50 und in der dritten Lage 52 verlaufen. Insbesondere bei einfacheren Anordnungen wird axialer Bauraum eingespart. Kühlkanäle 58 verlaufen durch die Statorwickelkopfplatine 24, um die Leiterbahnen 26 zusätzlich zur Entwärmung über das Statorblechpaket 16 zu kühlen. Die weitere Ausführung des Stators 8 entspricht der in FIG 3.

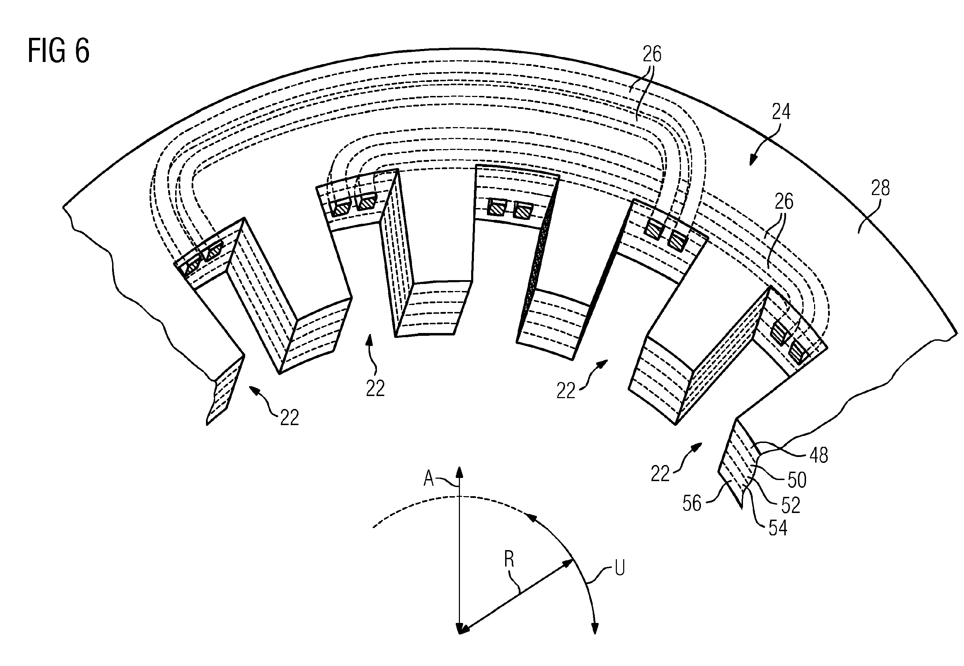

FIG 6 zeigt einen dreidimensionalen Ausschnitt einer Statorwickelkopfplatine 24, die, wie in FIG 3 und FIG 4 gezeigt fünflagig ausgeführt ist In den inneren Lagen 50, 52, 54 verlaufen die Leiterbahnen 26, die die Spulenstäbe 20 der jeweiligen Nuten 22 miteinander verbinden. Aus Gründen der Übersichtlichkeit wurde auf die Darstellung der Spulenstäbe verzichtet und es sind nur exemplarisch vier Leiterbahnen 26 dargestellt. Um die ohmschen Verluste, die von der Länge der Leiterbahnen 26 verursacht werden, zu minimieren und damit den Wirkungsgrad zu erhöhen wird zur Verbindung der jeweiligen Nuten 22 die minimal erforderliche Verbindungsstrecke gewählt. Insbesondere verlaufen die Leiterbahnen 26 jeweils in einer Lage 50, 52, 54. Die Leiterbahnen 26 können aber auch in mehreren Lagen 50, 52, 54 verlaufen.

Da die elektrische rotierende Maschine 2 einen großen Durchmesser, beispielsweise von mindestens einem Meter, aufweist, ist es unter Umständen erforderlich die Statorwickelkopfplatine 24, die im Ganzen einen kreisringförmigen Querschnitt aufweist, in mindestens zwei im Wesentlichen kreisringsektorförmige Subplatinen zu unterteilen, die anschließend zusammengefügt werden. Die weitere Ausführung der Statorwickelkopfplatine 24 entspricht der in FIG 3.

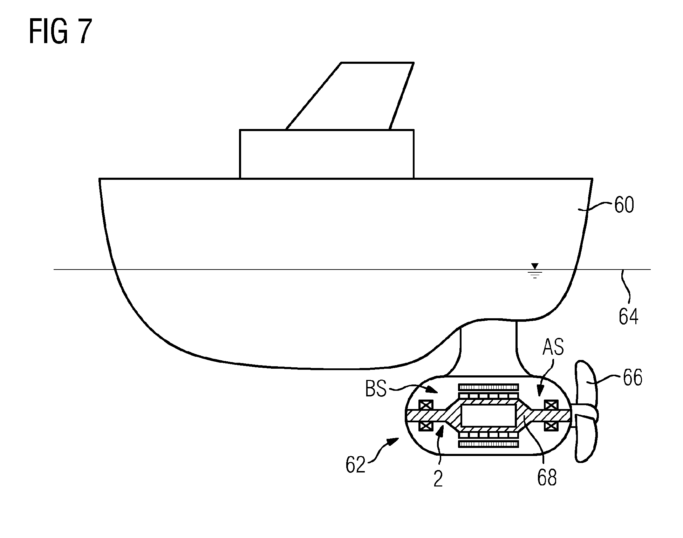

FIG 7 zeigt ein Schiff 60 mit einem Gondelantrieb 62. Der Gondelantrieb 62 befindet sich unter einer Wasseroberfläche 64 und weist eine elektrische rotierende Maschine 2 und einen Propeller 66 auf, wobei der Propeller 66 über eine Welle 68 mit der elektrischen rotierenden Maschine 2 verbunden ist. Die Welle 68 weist an einer Antriebsseite AS und an einer Nicht-Antriebsseite BS jeweils ein Lager 70 auf. Durch die Verwendung einer aus Gründen der Übersichtlichkeit in FIG 7 nicht dargestellten Statorwickelkopfplatine 24 und die damit verbundene optimale axiale Länge des Stators 8 der elektrischen rotierenden Maschine 2, wird ein kurzer Abstand zwischen den beiden Lagern 70 ermöglicht. Ein enger Lagerabstand wirkt sich positiv auf die Rotordynamik aus.

## Patentansprüche

1. Stator (8) für eine elektrische rotierende Maschine (2), welcher ein Statorblechpaket (16) mit Spulenstäben (20) und mindestens eine Statorwickelkopfplatine (24) mit einem isolierenden Grundkörper (28) aufweist,
wobei in den isolierenden Grundkörper (28) Leiterbahnen (26) integriert sind,
wobei die mindestens eine Statorwickelkopfplatine (24) auf einer Stirnseite (23) des Statorblechpakets (16) aufliegt und wobei die Leiterbahnen (26) mit den Spulenstäben (20) stoffschlüssig verbunden sind.

2. Stator (8) nach Anspruch 1,
wobei die stoffschlüssige Verbindung (44) als Schweißverbindung ausgebildet ist.

3. Stator (8) nach einem der Ansprüche 1 oder 2,
wobei die Statorwickelkopfplatine (24) mehrlagig ausgestaltet ist.

4. Stator (8) nach Anspruch 3,
wobei die mehrlagige Statorwickelkopfplatine (24) mindestens zwei übereinander angeordnete Lagen (48, 50, 52, 54, 56) umfasst, welche jeweils mindestens eine Leiterbahn (26) aufweisen.

5. Stator (8) nach einem der vorherigen Ansprüche,
wobei eine Dicke (D) der Leiterbahnen (26) mindestens einige Millimeter, insbesondere mindestens 3 Millimeter, und maximal einige Zentimeter, insbesondere maximal 3 Zentimeter, beträgt.

6. Stator (8) nach einem der vorherigen Ansprüche,
wobei die Statorwickelkopfplatine (24) über Verbindungselemente (30), insbesondere Spannbolzen (32), mit dem Statorblechpaket (16) verbunden ist.

7. Stator (8) nach Anspruch 6,
wobei die Verbindungselemente (30) in Axialrichtung (A) durch das Statorblechpaket (16) verlaufen.

8. Stator (8) nach einem der vorherigen Ansprüche,
wobei die Statorwickelkopfplatine (24) als Druckplatte (34) ausgeführt ist.

9. Stator (8) nach einem der vorherigen Ansprüche,
wobei die Leiterbahnen (26) mit dem Statorblechpaket (16) in einer wärmeleitfähigen Verbindung stehen.

10. Stator (8) nach einem der vorherigen Ansprüche,
wobei der isolierende Grundkörper (28) einen keramischen Werkstoff enthält.

11. Stator (8) nach Anspruch 10,
wobei der isolierende Grundkörper (28) Aluminiumoxid enthält.

12. Stator (8) nach einem der vorherigen Ansprüche,
wobei die Statorwickelkopfplatine (24) zumindest teilweise mit einem additiven Fertigungsverfahren hergestellt ist.

13. Elektrische rotierende Maschine (2) mit mindestens einem Stator (8) nach einem der Ansprüche 1 bis 12.

14. Gondelantrieb (62) mit zumindest einer elektrischen rotierenden Maschine (2) nach Anspruch 13.

15. Schiff (60) mit zumindest einem Gondelantrieb (62) nach Anspruch 14.

16. Verfahren zur Herstellung eines Stators (8) für eine elektrische rotierende Maschine (2) nach einem der Ansprüche 1 bis 12,
welcher ein Statorblechpaket (16) mit Spulenstäben (20) und eine Statorwickelkopfplatine (24) mit einem isolierenden Grundkörper (28) aufweist, in den Leiterbahnen (26) integriert sind,
wobei die mindestens eine Statorwickelkopfplatine (24) auf einer Stirnseite (23) des Statorblechpakets (16) aufgelegt wird und
wobei die Leiterbahnen (26) stoffschlüssig mit den Spulenstäben (20) verbunden werden.

17. Verfahren nach Anspruch 16,
wobei die Statorwickelkopfplatine (24) über Verbindungselemente (30), insbesondere Spannbolzen (32), mit dem Statorblechpaket (16) verbunden wird.

18. Verfahren nach einem der Ansprüche 16 oder 17,
wobei die Verbindungselemente (30) in Axialrichtung (A) durch den Stator (8) verlaufend montiert werden.

19. Verfahren nach einem der Ansprüche 16 bis 18,
wobei die Statorwickelkopfplatine (24) als Druckplatte (34) verwendet wird.

20. Verfahren nach einem der Ansprüche 16 bis 19,
wobei die Statorwickelkopfplatine (24) derartig montiert wird, dass die Leiterbahnen (26) mit dem Statorblechpaket (16) einer wärmeleitfähigen Verbindung stehen.

21. Verfahren nach einem der Ansprüche 16 bis 20,
wobei die Statorwickelkopfplatine (24) zumindest teilweise mit einem additiven Fertigungsverfahren hergestellt wird.
